# FASCICULE DE BREVET EUROPEEN

(11) **EP 1 802 487 B1**
(45) Date de publication et mention de la délivrance du brevet: **19.03.2008**
(21) Numéro de dépôt: 05797814.0
(22) Date de dépôt: 02.09.2005
(51) Int. Cl.: B60N 3/06

(54) **PADDING DE PROTECTION DES MEMBRES INFERIEURS D'UN OCCUPANT D'UN VEHICULE**
SCHUTZPOLSTERUNG FÜR DIE UNTEREN GLIEDMASSEN EINES AUTOINSASSEN
PROTECTIVE PADDING FOR THE LOWER LIMBS OF THE OCCUPANT OF A VEHICLE

(30) Priorité: 03.09.2004 FR 0409376
(43) Date de publication de la demande: 04.07.2007
(73) Titulaire: RENAULT S.A.S., 92100 Boulogne Billancourt (FR)
(72) Inventeur: BOUILLON, Jean-Charles, F-78340 Les Clayes sous Bois (FR); ESPANOL, Sophie, F-91190 Gif sur Yvette (FR); PORTIER, Laurent, F-78000 Versailles (FR)
(86) Numéro de dépôt international: PCT/FR2005/050704
(87) Numéro de publication internationale: WO 2006/027531

(56) Documents cités:
- DE-A1- 10 032 734
- FR-A- 2 844 234
- US-A- 6 070 905
- PATENT ABSTRACTS OF JAPAN vol. 1999, no. 02, 26 février 1999 (1999-02-26) & JP 10 297345 A (HONDA MOTOR CO LTD), 10 novembre 1998 (1998-11-10)
- PATENT ABSTRACTS OF JAPAN vol. 1999, no. 02, 26 février 1999 (1999-02-26) & JP 10 297343 A (HONDA MOTOR CO LTD), 10 novembre 1998 (1998-11-10)

## Description

L'invention concerne un padding de protection des membres inférieurs d'un occupant d'un véhicule, comportant une plaque dont une partie supérieure recouverte d'un revêtement est destinée à recevoir au moins un pied de l'occupant, connu de FR 2 844 234 A.

Il est connu d'utiliser des paddings en mousse permettant d'absorber des chocs. Cependant, pour que la protection des occupants soit optimale, il est nécessaire d'utiliser une grande quantité de mousse, ce qui n'est pas toujours compatible avec les contraintes liées à l'architecture du véhicule. Ainsi, si l'espace disponible est restreint, il n'est pas possible de proposer une absorption suffisamment efficace.

Il est également connu d'agencer des coussins gonflables de plancher en fond de cave à pieds. Cependant ces dispositifs présentent l'inconvénient de modifier la position des pieds pendant la phase d'absorption du choc.

Afin de pallier ces inconvénients, l'invention a pour objet un padding de protection des membres inférieurs d'un occupant d'un véhicule permettant de limiter les lésions occasionnées par un choc grâce à un bon positionnement des pieds pendant l'impact.

L'invention a aussi pour objet un padding offrant une protection pour les pieds d'un passager non conducteur, en offrant une zone élargie d'absorption.

A cet effet, l'invention propose un padding de protection des membres inférieurs d'un occupant d'un véhicule du type cité ci-dessus, caractérisé en ce qu'il comporte un point haut, correspondant à une zone d'appui des orteils de l'occupant, qui reste fixe en cas de choc, et un point bas, correspondant à une zone d'appui du talon de l'occupant, qui se déplace, en cas de choc, selon une direction sensiblement perpendiculaire au plan de la plaque.

Selon d'autres caractéristiques de l'invention:
- Le padding comporte un point intermédiaire, correspondant à une zone située au milieu du pied de l'occupant, qui, sous l'action de l'enfoncement du pied, se déplace selon une direction sensiblement perpendiculaire au plan de la plaque, la portion de plaque située entre le point haut et le point intermédiaire pivotant alors autour du point haut de façon que le pied de l'occupant soit fléchi.
- La portion de plaque située entre le point bas et le point intermédiaire est apte à se déformer pendant le choc.
- Les points haut, bas et intermédiaire sont des lignes horizontales formées de plots déformables par écrasement.
- La ligne intermédiaire comporte trois plots principaux, un central et deux latéraux, de façon que le pied de l'occupant soit encadré par deux plots.
- La ligne intermédiaire comporte en outre deux plots intermédiaires situés à égale distance entre deux plots principaux de façon à assurer la stabilité latérale du pied de l'occupant en cas de choc.
- Les plots principaux sont séparés par une distance de 100 à 120 mm.
- La plaque est noyée dans une mousse d'isolation acoustique.
- La distance entre les plots est optimisée de façon à permettre l'écoulement de la mousse entre les plots pendant l'injection.
- La plaque est inclinée d'un angle de 40 à 50° par rapport à l'horizontale.
- La plaque est destinée à recevoir les deux pieds de l'occupant.

D'autres caractéristiques et avantages de l'invention apparaîtront à la lecture de la description d'exemples de réalisation d'un padding de protection des membres inférieurs d'un occupant d'un véhicule en référence aux dessins annexés dans lesquels:
- La figure 1 est une vue latérale d'un padding de protection des membres inférieurs d'un occupant d'un véhicule selon l'invention
- La figure 2 est une vue de dessous du padding de la figure 1.

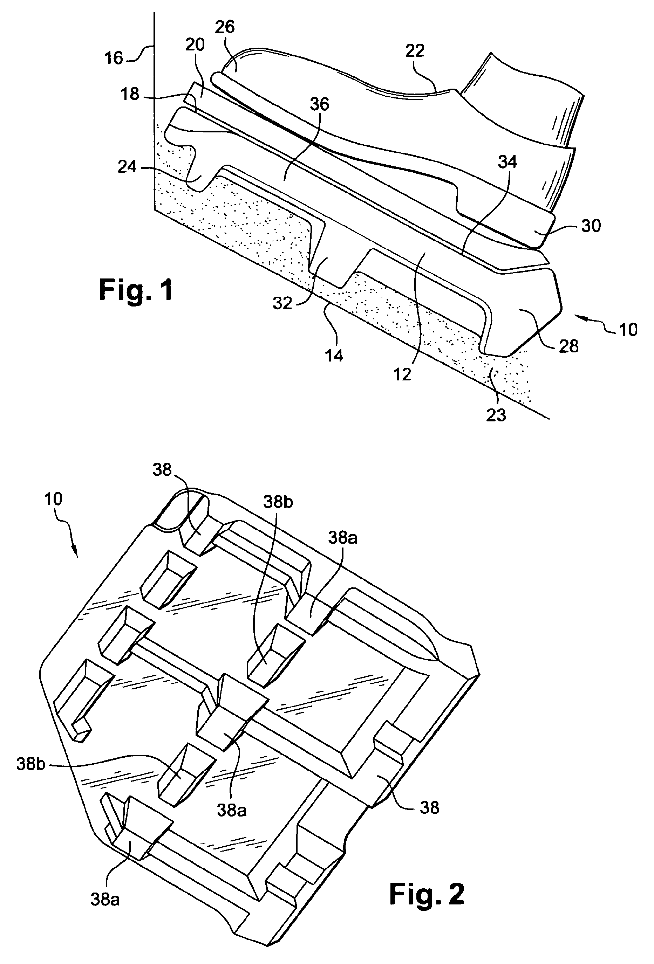

Tel que représenté à la figure 1, un padding 10 de protection des membres inférieurs d'un occupant d'un véhicule comporte une plaque 12 située au dessus d'une tôle de plancher 14 et en arrière d'un tablier 16. Une partie supérieure 18 de la plaque 12 est recouverte d'un revêtement 20 tel que de la moquette par exemple. La partie supérieure 18 de la plaque 12 est destinée à recevoir au moins un pied 22 de l'occupant du véhicule. Le padding 10 selon l'invention peut aussi être adapté pour le passager avant d'un véhicule et peut ainsi recevoir les deux pieds de l'occupant.

La plaque 12 est inclinée d'un angle de 40 à 50° par rapport à l'horizontale et présente une épaisseur de 20 à 40 mm.

L'espace vide entre le padding 10, le tablier 16 et la tôle de plancher 14 est rempli d'une mousse d'isolation acoustique 23.

Pendant un choc frontal, le pied 22 de l'occupant exerce une force sur la plaque 12 selon une direction perpendiculaire au plan de la plaque 12.

La plaque 12 comporte un point haut 24, qui correspond à une zone d'appui des orteils 26 de l'occupant. Le point haut 24 reste fixe pendant le choc.

La plaque 12 comporte aussi un point bas 28, qui correspond à une zone d'appui du talon 30 de l'occupant. Lors d'un choc, le point bas 28 se déplace sous l'action du talon 30 de l'occupant selon une direction sensiblement perpendiculaire au plan de la plaque 12.

La plaque 12 comporte aussi un point intermédiaire 32 qui se situe au niveau du milieu du pied 22 de l'occupant. Sous l'effet de l'enfoncement du pied et contrainte par le pied, le point intermédiaire 32 se déplace également selon une direction perpendiculaire au plan de la plaque 12.

De plus, la portion 34 de plaque 12 située entre le point bas 28 et le point intermédiaire 32 se déforme sous l'effet de l'enfoncement du pied.

Le déplacement du point intermédiaire 32 et du point bas 28 entraîne une rotation de la portion 36 de plaque 12 située entre le point intermédiaire 32 et le point haut 24, autour du point haut 32 qui reste fixe pendant le choc.

Ainsi, les orteils 26 de l'occupant demeurent à leur place pendant le choc et le pied 22 fléchit, ce qui permet de ne pas avoir de translation du pied 22 vers le tablier 16 selon une direction parallèle au plan de la plaque 12, risquant de provoquer des blessures.

Tel que représenté à la figure 2, les points bas 28, intermédiaire 32 et haut 24 sont des lignes horizontales formées de plots 38 déformables, régulièrement espacés.

Les plots 38 sont aptes à s'écraser sous l'effet de la force exercée par le pied 22 pendant un choc, ce qui permet ainsi le déplacement selon la direction perpendiculaire à la plaque 12 des points bas 28 et intermédiaire 32.

La ligne intermédiaire comporte des plots principaux 38a disposés au centre de la ligne et latéralement. Les plots principaux 38a sont écartés d'une distance de 100 à 120 mm. Ainsi, il pose ses deux pieds 22 sur le plancher du véhicule, les plots principaux 38a sont disposés de part et d'autre de chacun de ses pieds.

Pour améliorer la stabilité latérale du pied 22 en cas de choc, il est aussi prévu des plots intermédiaires 38b. Ainsi, la cheville de l'occupant ne risque pas de se tordre pendant un choc. Les plots intermédiaires 38b sont situés à égale distance entre deux plots principaux 38a.

La distance entre les plots 38 est optimisée de façon à permettre l'écoulement de la mousse 23 pendant son injection lors du processus de fabrication.

Ainsi le padding selon l'invention présente donc l'avantage d'améliorer la protection des occupants en empêchant un déplacement intempestif du pied de l'occupant pendant un choc.

## Revendications

1. Padding (10) de protection des membres inférieurs d'un occupant d'un véhicule, comportant une plaque (12) dont une partie supérieure (18) recouverte d'un revêtement (20) est destinée à recevoir au moins un pied (22) de l'occupant, **caractérisé en ce qu'**il comporte un point haut (24), correspondant à une zone d'appui des orteils (26) de l'occupant, qui reste fixe en cas de choc, et un point bas (28), correspondant à une zone d'appui du talon (30) de l'occupant, qui se déplace, en cas de choc, selon une direction sensiblement perpendiculaire au plan de la plaque (12).

2. Padding (10) de protection selon la revendication 1, **caractérisé en ce qu'**il comporte un point intermédiaire (32), correspondant à une zone située au milieu du pied (22) de l'occupant, qui, sous l'action de l'enfoncement du pied (22), se déplace selon une direction sensiblement perpendiculaire au plan de la plaque (12), la portion (36) de plaque (12) située entre le point haut (24) et le point intermédiaire (32) pivotant alors autour du point haut (24) de façon que le pied (22) de l'occupant soit fléchi.

3. Padding (10) de protection selon la revendication précédente, **caractérisé en ce que** la portion (34) de plaque (12) située entre le point bas (28) et le point intermédiaire (32) est apte à se déformer pendant le choc.

4. Padding (10) de protection selon l'une quelconque des revendications précédentes, **caractérisé en ce que** les points haut (24), bas (28) et intermédiaire (32) sont des lignes horizontales formées de plots (38) déformables par écrasement.

5. Padding (10) de protection selon l'une quelconque des revendications précédentes, **caractérisé en ce que** la ligne intermédiaire comporte trois plots principaux (38a), un central et deux latéraux, de façon que le pied (22) de l'occupant soit encadré par deux plots (38a).

6. Padding (10) selon la revendication précédente, **caractérisé en ce que** la ligne intermédiaire comporte en outre deux plots intermédiaires (38b) situés à égale distance entre deux plots principaux (38a) de façon à assurer la stabilité latérale du pied (22) de l'occupant en cas de choc.

7. Padding (10) de protection selon la revendication précédente, **caractérisé en ce que** les plots principaux (38a) sont séparés par une distance de 100 à 120 mm.

8. Padding (10) de protection selon l'une quelconque des revendications précédentes, **caractérisé en ce que** la plaque (12) est noyée dans une mousse d'isolation acoustique (23).

9. Padding (10) de protection selon la revendication précédente, **caractérisé en ce que** la distance entre les plots (38) est optimisée de façon à permettre l'écoulement de la mousse (23) entre les plots (38) pendant l'injection.

10. Padding (10) de protection selon l'une quelconque des revendications précédentes, **caractérisé en ce que** la plaque (12) est inclinée d'un angle de 40 à 50° par rapport à l'horizontale.

11. Padding (10) de protection selon l'une quelconque des revendications précédentes, **caractérisé en ce que** la plaque (12) est destinée à recevoir les deux pieds (22) de l'occupant.

## Claims

1. Protective padding (10) for the lower limbs of an occupant of a vehicle, comprising a plate (12) of which an upper part (18) covered with a covering (20) is intended to receive at least one foot (22) of the occupant, **characterized in that** it comprises an upper point (24), corresponding to a support region for the occupant's toes (26), which remains fixed in the event of an impact, and a lower point (28), corresponding to a support region for the occupant's heel (30), which, in the event of an impact, is displaced in a direction substantially perpendicular to the plane of the plate (12).

2. Protective padding (10) according to Claim 1, **characterized in that** it comprises an intermediate point (32), corresponding to a region situated at the middle of the occupant's foot (22), which, under the action of the foot (22) pushing in, is displaced in a direction substantially perpendicular to the plane of the plate (12), the portion (36) of the plate (12) situated between the upper point (24) and the intermediate point (32) then pivoting about the upper point (24) in such a way that the occupant's foot (22) is flexed.

3. Protective padding (10) according to the preceding claim, **characterized in that** the portion (34) of the plate (12) situated between the lower point (28) and the intermediate point (32) is able to deform during the impact.

4. Protective padding (10) according to any one of the preceding claims, **characterized in that** the upper (24), lower (28) and intermediate (32) points are horizontal lines formed by studs (38) which can be deformed by compression.

5. Protective padding (10) according to any one of the preceding claims, **characterized in that** the intermediate line comprises three main studs (38a), one central and two lateral, such that the occupant's foot (22) is framed by two studs (38a).

6. Padding (10) according to the preceding claim, **characterized in that** the intermediate line additionally comprises two intermediate studs (38b) situated at an equal distance between two main studs (38a) so as to ensure the lateral stability of the occupant's foot (22) in the event of an impact.

7. Protective padding (10) according to the preceding claim, **characterized in that** the main studs (38a) are separated by a distance of 100 to 120 mm.

8. Protective padding (10) according to any one of the preceding claims, **characterized in that** the plate (12) is embedded in a sound insulation foam (23).

9. Protective padding (10) according to the preceding claim, **characterized in that** the distance between the studs (38) is optimized so as to allow the foam (23) to flow between the studs (38) while it is being injected.

10. Protective padding (10) according to any one of the preceding claims, **characterized in that** the plate (12) is inclined by an angle of 40 to 50° with respect to the horizontal.

11. Protective padding (10) according to any one of the preceding claims, **characterized in that** the plate (12) is intended to receive both of the occupant's feet (22).

## Patentansprüche

1. Polster (10) für den Schutz der unteren Gliedmaßen eines Fahrzeuginsassen, mit einer Platte (12), dessen oberer Teil (18), der mit einer Abdeckung (20) abgedeckt ist, dazu bestimmt ist, wenigstens einen Fuß (22) des Insassen aufzunehmen, **dadurch gekennzeichnet, dass** es einen oberen Punkt (24), der einer Abstützzone für die Zehen (26) des Insassen entspricht und im Fall eines Stoßes fest bleibt, und einen unteren Punkt (28), der einer Abstützzone der Ferse (30) des Insassen entspricht und sich im Fall eines Stoßes in einer Richtung verlagert, die zu der Ebene der Platte (12) im Wesentlichen senkrecht ist, enthält.

2. Schutzpolster (10) nach Anspruch 1, **dadurch gekennzeichnet, dass** es einen Zwischenpunkt (32) enthält, der einer Zone entspricht, die sich in der Mitte des Fußes (22) des Insassen befindet, der sich unter der Wirkung des Eindrückens des Fußes (22) in einer Richtung verlagert, die zu der Ebene der Platte (12) im Wesentlichen senkrecht ist, wobei der Abschnitt (36) der Platte (12), der sich zwischen dem oberen Punkt (24) und dem Zwischenpunkt (32) befindet, um den oberen Punkt (24) in der Weise schwenkt, dass der Fuß (22) des Insassen gebeugt wird.

3. Schutzpolster (10) nach dem vorhergehenden Anspruch, **dadurch gekennzeichnet, dass** sich der Abschnitt (34) der Platte (12), der sich zwischen dem unteren Punkt (28) und dem Zwischenpunkt (32) befindet, während des Stoßes verformen kann.

4. Schutzpolster (10) nach einem der vorhergehenden Ansprüche, **dadurch gekennzeichnet, dass** der obere Punkt (24), der untere Punkt (28) und der Zwischenpunkt (32) horizontale Linien sind, die aus Höckern (38) gebildet sind, die durch Quetschen verformbar sind.

5. Schutzpolster (10) nach einem der vorhergehenden Ansprüche, **dadurch gekennzeichnet, dass** die Zwischenlinie drei Haupthöcker (38a), einen mittleren und zwei seitliche, besitzt, derart, dass der Fuß (22) des Insassen von zwei Höckern (38a) eingerahmt ist.

6. Polster (10) nach dem vorhergehenden Anspruch, **dadurch gekennzeichnet, dass** die Zwischenlinie außerdem zwei Zwischenhöcker (38b) besitzt, die sich in gleichem Abstand zwischen zwei Haupthöckern (38a) befinden, derart, dass die seitliche Stabilität des Fußes (22) des Insassen im Fall eines Stoßes gewährleistet ist.

7. Schutzpolster (10) nach dem vorhergehenden Anspruch, **dadurch gekennzeichnet, dass** die Haupthöcker (38a) durch einen Abstand von 100 bis 120 mm getrennt sind.

8. Schutzpolster (10) nach einem der vorhergehenden Ansprüche, **dadurch gekennzeichnet, dass** die Platte (12) in einen schalldämmenden Schaum (23) eingebettet ist.

9. Schutzpolster (10) nach dem vorhergehenden Anspruch, **dadurch gekennzeichnet, dass** der Abstand zwischen den Höckern (38) in der Weise optimiert ist, dass ein Fließen des Schaums (23) zwischen den Höckern (38) während des Einspritzens möglich ist.

10. Schutzpolster (10) nach einem der vorhergehenden Ansprüche, **dadurch gekennzeichnet, dass** die Platte (12) um einen Winkel von 40 bis 50° in Bezug auf die Horizontale geneigt ist.

11. Schutzpolster (10) nach einem der vorhergehenden Ansprüche, **dadurch gekennzeichnet, dass** die Platte (12) dazu bestimmt ist, die zwei Füße (22) des Insassen aufzunehmen.
